(19) Europäisches Patentamt
European Patent Office
Office européen des brevets

(11) **EP 4 183 808 A1**

(12) **EUROPEAN PATENT APPLICATION**
published in accordance with Art. 153(4) EPC

(43) Date of publication:
**24.05.2023 Bulletin 2023/21**

(21) Application number: **21842596.5**

(22) Date of filing: **13.07.2021**

(51) International Patent Classification (IPC):
**C08F 290/06** (2006.01)    **C08F 290/14** (2006.01)
**C08F 299/06** (2006.01)    **C09D 175/14** (2006.01)
**C09D 175/16** (2006.01)    **C08F 2/46** (2006.01)
**C08G 18/67** (2006.01)

(52) Cooperative Patent Classification (CPC):
**C08F 2/46; C08F 290/06; C08F 290/14;
C08F 299/06; C08G 18/67; C09D 175/16;**
C09D 175/14

(86) International application number:
**PCT/JP2021/026227**

(87) International publication number:
**WO 2022/014558 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.07.2020 JP 2020120889**

(71) Applicant: **Daicel-Allnex Ltd.**
**Tokyo**
**1030027 (JP)**

(72) Inventors:
• **OHSHITA, Toru**
**Tokyo 103-0027 (JP)**
• **SAGAMI, Takao**
**Tokyo 103-0027 (JP)**

(74) Representative: **Grünecker Patent- und
Rechtsanwälte
PartG mbB
Leopoldstraße 4
80802 München (DE)**

(54) **URETHANE (METH)ACRYLATE COMPOSITION, ACTIVE ENERGY RAY-CURABLE COMPOSITION, AND CURED PRODUCT THEREOF**

(57)    A urethane (meth)acrylate composition and an active energy ray-curable composition which realize high hardness and excellent flexibility and weather resistance in a cured product are provided. Also, a cured product that exhibits high hardness and excellent flexibility and weather resistance is provided.

A urethane (meth)acrylate composition being
(i) a mixture containing: a reaction product of a compound (A) and a compound (B); a reaction product of the compound (A) and a compound (C); and a compound (D), or
(ii) a mixture containing: a reaction product of the compound (A), the compound (B), and the compound (C); and the compound (D), in which

the compound (A) is polyisocyanate, the compound (B) is monofunctional (meth)acrylate having a hydroxy group, the compound (C) is polyfunctional (meth)acrylate having a hydroxy group, and the compound (D) is polyfunctional (meth)acrylate having no hydroxy group, and a weight ratio (B/(C + D)) of a constituent unit derived from the compound (B) with respect to a total (C + D) of a constituent unit derived from the compound (C) and the compound (D) is from 0.30 to 2.00, and

a weight proportion (C/(C + D)) of the constituent unit derived from the compound (C) with respect to the total (C + D) of the constituent unit derived from the compound (C) and the compound (D) is from 0.28 to 0.67.

EP 4 183 808 A1

Processed by Luminess, 75001 PARIS (FR)

**Description**

Technical Field

The present disclosure relates to a urethane (meth)acrylate composition, an active energy ray-curable composition containing the urethane (meth)acrylate composition, and a cured product thereof. The present application claims priority from the Japanese Patent Application No. 2020-120889, filed in Japan on July 14, 2020, the content of which is incorporated herein by reference.

Background Art

Curable urethane acrylate, having a combination of various backbone structures, can achieve various performances, such as hardness, flexibility, toughness, and solvent resistance. Thus, it has been used in a wide variety of fields, such as adhesive agents, inks, and coating agents.

For example, a hard coating film used in a surface protecting film for various displays is a film having a coating layer (cured product layer, cured film) formed of a coating agent provided on a surface of a plastic film having a low surface hardness, the plastic film being formed of polyethylene terephthalate, polycarbonate, or polymethyl methacrylate; however, the coating layer is required to have good flexibility, excellent wear resistance and curling resistance, and excellent weather resistance while as well as high hardness and excellent scratch resistance.

Patent Document 1 describes a ultraviolet curable resin composition containing polyisocyanate formed by reacting 2-butyl-2-ethyl-1,3-propanediol and 1,3-bis(isocyanatomethyl)cyclohexane, and urethane acrylate formed by reacting pentaerythritol triacrylate and pentaerythritol tetraacrylate.

Furthermore, Patent Document 2 describes an energy ray curable resin composition containing urethane acrylate formed by a reaction of organic polyisocyanate, polycarbonate polyol having an alicyclic structure, and acrylate containing one or more hydroxy groups in a molecule.

Citation List

Patent Document

  Patent Document 1: JP 2009-062499 A
  Patent Document 2: JP 2009-227915 A

Summary of Invention

Technical Problem

However, a cured film of the ultraviolet curable resin composition of Patent Document 1 has problems: although surface hardness is high, flexibility is poor, curling resistance is insufficient, and weather resistance is also insufficient. A cured film of the ultraviolet curable resin composition of Patent Document 2 has problems; although flexibility is good, hardness and scratch resistance are insufficient.

An object of the present disclosure is to provide a urethane (meth)acrylate composition that realizes high hardness and excellent flexibility and weather resistance in a cured product, an active energy ray-curable composition containing the urethane (meth)acrylate composition, and a cured product thereof.

Solution to Problem

As a result of diligent research to achieve the object described above, the inventors of the present disclosure found that a cured product having high hardness and excellent flexibility and weather resistance in a well-balanced manner can be formed by a urethane (meth)acrylate composition containing a particular reaction product formed by reacting an isocyanate compound (e.g., isocyanurate compound derived from diisocyanate), a monofunctional (meth)acrylate, and a polyfunctional (meth)acrylate having a hydroxy group in a particular weight ratio, and a particular polyfunctional (meth)acrylate having no hydroxy group.

That is, the present disclosure provides a urethane (meth)acrylate composition being

  (i) a mixture containing: a reaction product of a compound (A) and a compound (B); a reaction product of the compound (A) and a compound (C); and a compound (D), or

(ii) a mixture containing: a reaction product of the compound (A), the compound (B), and the compound (C); and the compound (D), in which

the compound (A) is polyisocyanate, the compound (B) is monofunctional (meth)acrylate having a hydroxy group, the compound (C) is polyfunctional (meth)acrylate having a hydroxy group, and the compound (D) is polyfunctional (meth)acrylate having no hydroxy group, and
a weight ratio (B/(C + D)) of a constituent unit derived from the compound (B) with respect to a total (C + D) of a constituent unit derived from the compound (C) and the compound (D) is from 0.30 to 2.00, and
a weight proportion (C/(C + D)) of the constituent unit derived from the compound (C) with respect to the total (C + D) of the constituent unit derived from the compound (C) and the compound (D) is from 0.28 to 0.67.

In the urethane (meth)acrylate composition described above, the compound (C) is preferably pentaerythritol tri(meth)acrylate, and the compound (D) is preferably pentaerythritol tetra(meth)acrylate.

The urethane (meth)acrylate composition described above preferably has a viscosity at 60°C from 1000 to 5000 mPa·s.

The urethane (meth)acrylate composition described above preferably has a weight average molecular weight from 500 to 2500.

The present disclosure also provides an active energy ray-curable composition containing the urethane (meth)acrylate composition described above and a photopolymerization initiator.

The active energy ray-curable composition preferably further contains a reactive diluent and/or a volatile organic solvent.

The present disclosure also provides a cured product of the active energy ray-curable composition described above.

Advantageous Effects of Invention

Since the urethane (meth)acrylate composition of the present disclosure has the configuration described above, a cured product (e.g., coating layer) realizing excellent flexibility and weather resistance can be formed by using the urethane (meth)acrylate composition as an active energy ray-curable composition containing the urethane (meth)acrylate composition.

Description of Embodiments

Urethane (Meth)acrylate Composition

A urethane (meth)acrylate composition of the present disclosure is

(i) a mixture containing: a reaction product of a compound (A) and a compound (B); a reaction product of the compound (A) and a compound (C); and a compound (D), or
(ii) a mixture containing: a reaction product of the compound (A), the compound (B), and the compound (C); and the compound (D), in which

the compound (A) is polyisocyanate, the compound (B) is monofunctional (meth)acrylate having a hydroxy group, the compound (C) is polyfunctional (meth)acrylate having a hydroxy group, and the compound (D) is polyfunctional (meth)acrylate having no hydroxy group, and
a weight ratio (B/(C + D)) of a constituent unit derived from the compound (B) with respect to a total (C + D) of a constituent unit derived from the compound (C) and the compound (D) is from 0.30 to 2.00, and
a weight proportion (C/(C + D)) of the constituent unit derived from the compound (C) with respect to the total (C + D) of the constituent unit derived from the compound (C) and the compound (D) is from 0.28 to 0.67.

The viscosity at 60°C of the urethane (meth)acrylate composition of the present disclosure is, for example, preferably from 1000 to 5000 mPa-s, more preferably from 1250 to 4000 mPa·s, even more preferably from 1500 to 3500 mPa·s, and particularly preferably from 1750 to 3000 mPa·s. When the viscosity is in the range, scratch resistance and the cured product tends to have adequate curling resistance. Note that the viscosity of the urethane (meth)acrylate composition can be measured by, for example, using an E-type viscometer (TV-25, available from Toki Sangyo Co., Ltd.) in a condition at 60°C.

The weight average molecular weight (Mw) of the urethane (meth)acrylate composition of the present disclosure is, for example, preferably from 500 to 2500, more preferably from 800 to 2200, and even more preferably from 1000 to 2000. When the weight average molecular weight is in the range, the cured product tends to have adequate wear resistance and curling resistance. "Weight average molecular weight" in the present disclosure is a value measured by GPC, calibrated with polystyrene, and can be measured by, for example, a method described in Examples of the present disclosure.

Polyisocyanate, Compound (A)

Examples of the compound (A) include aliphatic polyisocyanates and aromatic polyisocyanates, and from the perspective of ease of formation of a cured product that is resistant to yellowing and that has excellent flexibility, an aliphatic polyisocyanate is preferred.

Examples of the aliphatic polyisocyanate include straight chain or branched chain aliphatic polyisocyanate, alicyclic polyisocyanate, and biuret compounds, adduct compounds, or isocyanurate compounds (trimers) of aliphatic diisocyanate. From the perspective of capability of imparting excellent weather resistance to the cured product, alicyclic polyisocyanate and isocyanurate compounds derived from aliphatic diisocyanate are preferred, isocyanurate compounds derived from aliphatic diisocyanate (e.g., having the total number of carbons of 4 to 30, preferably 6 to 14; specifically, 1,4-tetramethylene diisocyanate, 1,5-pentamethylene diisocyanate, 1,6-hexamethylene diisocyanate, 2,2,4-trimethyl-1,6-hexamethylene diisocyanate, lysine diisocyanate, and the like) are more preferred, and isocyanurate compounds derived from 1,6-hexamethylene diisocyanate are even more preferred.

From the perspective of capability of imparting excellent scratch resistance and wear resistance to the cured product, an isocyanate group concentration of the isocyanurate compound described above is, for example, preferably from 18.0 to 25.0 wt.%, more preferably from 19.0 to 24.0 wt.%, and even more preferably from 20.0 to 23.5 wt.%. Note that the isocyanate group concentration can be measured in accordance with the method B of JIS K 1603-1:2007.

Furthermore, from the perspective of capability of imparting excellent scratch resistance and wear resistance to the cured product, viscosity at 25°C of the isocyanurate compound described above is, for example, preferably from 100 to 5000 mPa.s, more preferably from 200 to 4000 mPa·s, and even more preferably from 250 to 3500 mPa·s. Note that the viscosity of the isocyanurate compound described above can be measured by, for example, using an E-type viscometer (TV-25, available from Toki Sangyo Co., Ltd.).

Examples of the straight chain aliphatic polyisocyanate include hexamethylene diisocyanate, and examples of the branched chain aliphatic polyisocyanate include 2,2,4-trimethylhexamethylene diisocyanate and 2,4,4-trimethylhexamethylene diisocyanate.

Examples of the alicyclic polyisocyanate include alicyclic diisocyanate such as isophorone diisocyanate, and alicyclic polyisocyanate formed by hydrogenation of aromatic polyisocyanate, such as hydrogenated diphenylmethane diisocyanate (dicyclohexylmethane 4,4'-diisocyanate) and hydrogenated xylylene diisocyanate.

Examples of the aromatic polyisocyanate include aromatic diisocyanate such as diphenylmethane diisocyanate, aromatic triisocyanate, and aromatic tetraisocyanate.

Commercially available products may be used as the aliphatic polyisocyanate and the aromatic polyisocyanate, and examples thereof include "VESTANAT IPDI (isophorone diisocyanate) available from Evonik", "TMDI (2,2,4-trimethylhexamethylene diisocyanate) available from Evonik", "hydrogenated MDI (dicyclohexylmethane 4,4'-diisocyanate) available from Evonik", "HDI (hexamethylene diisocyanate) available from Tosoh Corporation", "MDI (diphenylmethane diisocyanate) available from Tosoh Corporation", "DURANATE TUL-100 (isocya isocyanurate compound derived from 1,6-hexamethylene diisocyanate) available from Asahi Kasei Corporation", "TAKENATE D-170N (isocyanurate compound derived from 1,6-hexamethylene diisocyanate) available from Mitsui Chemicals Polyurethanes, Inc.", and "Sumidur N3300 (isocyanurate compound derived from 1,6-hexamethylene diisocyanate) available from Sumika Bayer Urethane Co., Ltd.".

One type of the polyisocyanate (compound (A)) may be used alone, or a combination of two or more types of the polyisocyanates may be used.

In the urethane (meth)acrylate composition of the present disclosure, a content of the constituent unit derived from the compound (A) is preferably from 35 to 55 wt.%, more preferably from 38 to 52 wt.%, even more preferably from 40 to 50 wt.%, and particularly preferably from 42 to 48 wt.%, per 100 wt.% total of the constituent units derived from the compound (A), the compound (B) and the compound (C); and the compound (D). When the content of the constituent unit derived from the compound (A) is in the range, weather resistance and curling resistance of the cured product tend to be adequate.

Compound (B), Monofunctional (Meth)acrylate Having Hydroxy Group

The compound (B) is a (meth)acrylate having one (meth)acryloyl group and a hydroxy group. The number of the hydroxy group is preferably one. Examples of the compound (B) include hydroxyalkyl (meth)acrylate, polyalkylene glycol mono(meth)acrylate, and alkylol (meth)acrylamide. From the perspective of capability of imparting excellent wear resistance and weather resistance to the cured product, hydroxyalkyl (meth)acrylate is preferred.

The hydroxyalkyl (meth)acrylate has a total number of carbons of preferably 4 to 20, and more preferably 5 to 10. Specific examples thereof include 2-hydroxyethyl (meth)acrylate, 3-hydroxypropyl (meth)acrylate, 4-hydroxy-n-butyl (meth)acrylate, 2-hydroxypropyl (meth)acrylate, 2-hydroxy-n-butyl (meth)acrylate, 3-hydroxy-n-butyl (meth)acrylate, and 1,4-cyclohexanedimethanol mono(meth)acrylate.

Examples of the polyalkylene glycol mono(meth)acrylate include polyethylene glycol mono(meth)acrylate and polypropylene glycol mono(meth)acrylate.

Examples of the alkylol (meth)acrylamide include alkylol (meth)acrylamide having the total number of carbons of 4 to 20. Specific examples thereof include N-methylol (meth)acrylamide and N-(2-hydroxyethyl) (meth)acrylamide.

One type of the compound (B) (monofunctional (meth)acrylate having a hydroxy group) may be used alone, or a combination of two or more types of the compounds (B) may be used.

In the urethane (meth)acrylate composition of the present disclosure, a content of the constituent unit derived from the compound (B) is preferably from 15 to 32 wt.%, more preferably from 18 to 31 wt.%, even more preferably from 20 to 30 wt.%, and particularly preferably from 23 to 29 wt.% per 100 wt.% total of: the constituent units derived from the compound (A), the compound (B) and the compound (C); and the compound (D). When the content of the constituent unit derived from the compound (B) is in the range, curling resistance, weather resistance, and scratch resistance of the cured product tend to be adequate.

Compound (C), Polyfunctional (Meth)acrylate Having Hydroxy Group

The compound (C) is a polyfunctional (meth)acrylate having two or more (meth)acryloyl groups and one or more hydroxy groups. The number of the (meth)acryloyl groups is preferably from 2 to 7, and more preferably from 3 to 5. The number of hydroxy groups is preferably from 1 to 6, more preferably from 1 to 3, and even more preferably 1.

The compound (C) has the total number of carbons of preferably 5 to 40, and more preferably 9 to 30. Specific examples thereof include glycerin di(meth)acrylate, trimethylolpropane di(meth)acrylate, trimethylolethane di(meth)acrylate, pentaerythritol tri(meth)acrylate, dipentaerythritol penta(meth)acrylate, sorbitol penta(meth)acrylate, and ditrimethylolpropane tri(meth)acrylate. Among these, from the perspective of ease in imparting a high surface hardness to the cured product, pentaerythritol tri(meth)acrylate is preferred.

In the urethane (meth)acrylate composition of the present disclosure, the content of the constituent unit derived from the compound (C) is preferably from 5 to 20 wt.%, more preferably from 6 to 19 wt.%, and even more preferably from 7 to 18 wt.% per 100 wt.% total of the constituent units derived from the compound (A), the compound (B) and the compound (C); and the compound (D).

One type of the compound (C) (polyfunctional (meth)acrylate having a hydroxy group) may be used alone, or a combination of two or more types of the compounds (C) may be used.

Compound (D), Polyfunctional (Meth)acrylate Having No Hydroxy Group

The compound (D) is a polyfunctional (meth)acrylate having two or more (meth)acryloyl groups and no hydroxy group. The number of the (meth)acryloyl groups is preferably from 2 to 8, and more preferably from 3 to 6.

The compound (D) has the total number of carbons of preferably 8 to 44, and more preferably 12 to 34. Specific examples thereof include glycerin tri(meth)acrylate, trimethylolpropane tri(meth)acrylate, trimethylolethane tri(meth)acrylate, pentaerythritol tetra(meth)acrylate, dipentaerythritol hexa(meth)acrylate, sorbitol hexa(meth)acrylate, and ditrimethylolpropane tetra(meth)acrylate. Among these, from the perspective of capability of imparting excellent scratch resistance and wear resistance to the cured product, pentaerythritol tetra(meth)acrylate is preferred.

In the urethane (meth)acrylate composition of the present disclosure, the content of the compound (D) is preferably from 9 to 20 wt.%, more preferably from 10 to 19 wt.%, and even more preferably from 11 to 18 wt.% per 100 wt.% total of the constituent units derived from the compound (A), the compound (B) and the compound (C); and the compound (D).

One type of the compound (D) (polyfunctional (meth)acrylate having no hydroxy group) may be used alone, or a combination of two or more types of the compounds (D) may be used.

In the urethane (meth)acrylate composition of the present disclosure, the total (C + D) of the constituent unit derived from the compound (C) and the compound (D) is preferably from 20 to 50 wt.%, more preferably from 21 to 40 wt.%, even more preferably from 22 to 35 wt.%, and particularly preferably from 24 to 30 wt.% per 100 wt.% total of the constituent units derived from the compound (A), the compound (B) and the compound (C); and the compound (D). When the total (C + D) is in the range, surface hardness and curling resistance of the cured product tend to be adequate.

A weight proportion (C/(C + D)) of the constituent unit derived from the compound (C) in the total (C + D) is from 0.28 to 0.67, preferably from 0.29 to 0.66, and more preferably from 0.30 to 0.65. When the weight proportion (C/(C + D)) is in the range, scratch resistance and curling resistance of the cured product tend to be adequate.

A weight ratio (B/(C + D)) of the constituent unit derived from the compound (B) to the total (C + D) of the constituent unit derived from the compound (C) and the compound (D) is from 0.30 to 2.00, preferably from 0.40 to 1.70, and more preferably from 0.50 to 1.30. When the weight ratio (B/(C + D)) is in the range, curling resistance, weather resistance, and scratch resistance of the cured product tend to be adequate.

The urethane (meth)acrylate composition of the present disclosure is (i) a mixture containing a reaction product of the compound (A) and the compound (B), a reaction product of the compound (A) and the compound (C), and the compound (D), or (ii) a mixture containing a reaction product of the compound (A), the compound (B), and the compound (C), and the compound (D). The mixture of (i) described above is preferable from the perspective of ease in realizing an inner structure exhibiting hardness and flexibility of the cured product in a well-balanced manner by making a phase exhibiting hardness and a phase exhibiting flexibility to be adequately miscible.

The reaction product of the compound (A) and the compound (B) is urethane (meth)acrylate having: a urethane bond bonding the isocyanate group of the compound (A) (polyisocyanate) and the hydroxy group of the compound (B) (monofunctional (meth)acrylate having a hydroxy group); and a (meth)acryloyl group derived from the compound (B).

The reaction product of the compound (A) and the compound (C) is urethane (meth)acrylate having: a urethane bond bonding the isocyanate group of the compound (A) and the hydroxy group of the compound (C) (polyfunctional (meth)acrylate having no hydroxy group); and a (meth)acryloyl group derived from the compound (C).

The reaction product of the compound (A), the compound (B), and the compound (C) is urethane (meth)acrylate having: a urethane bond bonding the isocyanate group of the compound (A) and the hydroxy group of the compound (B); a urethane bond bonding the isocyanate group of the compound (A) and the hydroxy group of the compound (C); and a (meth)acryloyl group derived from the compound (B) and the compound (C).

In the urethane (meth)acrylate composition according to the mixture of (i) above, the total (A + B) of the constituent unit derived from the compound (A) and the constituent unit derived from the compound (B) in the reaction product of the compound (A) and the compound (B) is preferably from 40 to 76 wt.%, more preferably from 50 to 73 wt.%, and even more preferably from 55 to 71 wt.% per 100 wt.% total of the constituent units derived from the compound (A), the compound (B) and the compound (C); and the compound (D), and the total (A + C) of the constituent unit derived from the compound (A) and the constituent unit derived from the compound (C) in the reaction product of the compound (A) and the compound (C) is preferably from 13.9 to 40 wt.%, more preferably from 14.1 to 30 wt.%, and even more preferably from 14.3 to 24 wt.% per 100 wt.% total of: the constituent units derived from the compound (A), the compound (B) and the compound (C); and the compound (D).

The weight ratio ((A + B)/(A + C)) of the reaction product of the compound (A) and the compound (B) to the reaction product of the compound (A) and the compound (C) in the urethane (meth)acrylate composition according to the mixture of (i) described above is preferably from 0.90 to 6.00, more preferably from 2.30 to 5.00, even more preferably from 2.50 to 4.90, and particularly preferably from 2.70 to 4.70.

The total weight proportion of the reaction product of the compound (A) and the compound (B) and the reaction product of the compound (A) and the compound (C) in the urethane (meth)acrylate composition according to the mixture of (i) described above is preferably 50 wt.% or greater, more preferably from 50 to 95 wt.%, even more preferably from 65 to 93 wt.%, and particularly preferably from 75 to 91 wt.%.

The weight proportion of the reaction product of the compound (A), the compound (B), and the compound (C) in the urethane (meth)acrylate composition according to the mixture of (ii) described above is preferably 50 wt.% or greater, more preferably from 50 to 95 wt.%, even more preferably from 65 to 93 wt.%, and particularly preferably from 75 to 91 wt.%.

The mixture of (i) described above may be formed by separately preparing a reaction product formed by reacting the compound (A) and one of the compound (B) or the compound (C), and a reaction product formed by reacting the compound (A) and the other one of the compound (B) or the compound (C), and then mixing these two reaction products. The compound (D) may be mixed at the time of at least one of the reactions or may be mixed at the time of mixing the two reaction products.

The mixture of (i) above may be a mixture formed by reacting the compound (A) and one of the compound (B) or the compound (C), then adding an additional compound (A) and the other one of the compound (B) or the compound (C), and further reacting. The compound (D) may be mixed at the time of the first and/or second reaction or maybe mixed after the second reaction.

The mixture of (ii) described above may be formed by, for example, mixing the compound (D) in a reaction product formed by mixing the compound (A), the compound (B), and the compound (C) all together and reacting, before the reaction and/or after the reaction.

The mixture of (i) described above may contain a reaction product of the compound (A), the compound (B), and the compound (C). The mixture of (ii) described above may contain a reaction product of the compound (A) and the compound (B) and/or a reaction product of the compound (A) and the compound (C).

In the mixtures (i) and (ii) described above, when a large amount of unreacted isocyanate groups remains, problems such as gelling and curing defects may occur in the curing of the curable composition. To avoid such problems, the reaction is preferably performed until the isocyanate group concentration remaining in the reaction solution reaches, for example, 0.05 wt.% or less. The remaining isocyanate group concentration can be analyzed by, for example, the following method.

Measurement of Isocyanate Group Concentration

Measurement of the isocyanate group concentration by a titration method is performed as follows, for example. Note that the measurement is performed under stirring by a stirrer in a 100 mL glass flask. First, a blank value is measured as follows. In 15 mL of THF, 15 mL (0.1 N) of a THF solution of dibutylamine is added. After 3 drops of bromophenol blue (1 wt.% methanol diluted solution) are added to make the solution blue, titration was performed with an HCl aqueous solution with a normality of 0.1 N. A titrated amount of the HCl aqueous solution at the time of color change is expressed as Vb (mL). Then, an isocyanate group concentration is measured. First, Ws (g) of a sample is weighed and dissolved in 15 mL of THF, and 15 mL (0.1 N) of a THF solution of dibutylamine is added. After formation of a solution was confirmed, 3 drops of bromophenol blue (1 wt.% methanol diluted solution) are added to make the solution blue, and then titration was performed with an HCl aqueous solution with a normality of 0.1 N. A titrated amount of the HCl aqueous solution at the time of color change is expressed as Vs (mL). Then, using the following mathematical expression, the isocyanate group concentration in the sample is calculated.

$$\text{Isocyanate group concentration (wt.\%)} = (Vb - Vs) \times 1.005 \times 0.42 \div Ws$$

The isocyanate group concentration at the end of the reaction is an isocyanate group concentration with a higher value selected from a theoretical isocyanate group concentration in a case where all of the hydroxy groups charged in the system are assumed to be urethanized or an isocyanate group concentration at the time when the isocyanate group concentration in the reaction solution stops changing.

Note that, when the compound (A) (polyisocyanate) and the compound (B) (monofunctional (meth)acrylate having a hydroxy group) and/or the compound (C) (polyfunctional (meth)acrylate having a hydroxy group) are blended, a molar ratio of the isocyanate groups to the hydroxy groups (isocyanate group/hydroxy group) is, for example, preferably from 1.00 to 1.3, more preferably from 1.01 to 1.2, even more preferably from 1.02 to 1.1, and particularly preferably from 1.02 to 1.05.

The reaction to form the urethane (meth)acrylate composition of the present disclosure is preferably performed while polymerization is prevented in the presence of a polymerization inhibitor (e.g., dibutylhydroxytoluene, hydroquinone, hydroquinone monomethyl ether, phenothiazine). An amount of the polymerization inhibitor to be added is not particularly limited and, for example, is preferably from 1 to 10000 ppm (based on weight), more preferably from 100 to 5000 ppm, and even more preferably from 200 to 1000 ppm, with respect to the amount of the resulting urethane (meth)acrylate composition. When the amount of the polymerization inhibitor is in the range, the polymerization inhibitor readily provides adequate polymerization inhibition effect, and the physical properties of the cured product are less likely to be negatively affected.

The reaction to form the urethane (meth)acrylate composition of the present disclosure is preferably performed in a gas atmosphere containing molecular oxygen. The oxygen concentration is appropriately selected taking safety into consideration.

The reaction to form the urethane (meth)acrylate composition of the present disclosure may be performed by using a catalyst (urethanization catalyst) to achieve an adequate reaction rate. As the catalyst, for example, dibutyltin dilaurate, tin octylate, and tin chloride can be used, and dibutyltin dilaurate is preferred from the perspective of reaction rate. An amount of the catalyst to be added is not particularly limited and, for example, is preferably from 1 to 3000 ppm (based on weight), and more preferably from 10 to 1000 ppm, with respect to the amount of the resulting urethane (meth)acrylate composition. When the amount of the catalyst to be added is in the range, the reaction rate can be adequately improved, and the physical properties of the cured product are less likely to be negatively affected.

The reaction to form the urethane (meth)acrylate composition of the present disclosure can be performed in the presence of a known volatile organic solvent. The volatile organic solvent can be distilled off by pressure reduction or the like after the production of the urethane (meth)acrylate composition or after molding of an active energy ray-curable composition. Examples of the volatile organic solvent include organic solvents each having a boiling point of not higher than 200°C at 1.0 atm (e.g., ketone-based solvents such as acetone, methyl ethyl ketone, and cyclohexanone; ester-based solvents such as methyl acetate, ethyl acetate, butyl acetate, and methoxyethyl acetate; ether-based solvents such as diethyl ether, ethylene glycol methyl ether, and dioxane; aromatic solvents such as toluene and xylene; aliphatic solvents such as pentane and hexane; halogen-based solvents such as methylene chloride, chlorobenzene, and chloroform; and alcohol-based solvents such as isopropanol and butanol).

The reaction temperature of the reaction to form the urethane (meth)acrylate composition of the present disclosure is not particularly limited and, for example, is preferably 130°C or lower, and more preferably from 30 to 100°C. When the reaction temperature is in the range, the adequate reaction rate in practice can be achieved, and crosslinking by radical polymerization at a double bond moiety and formation of gelled materials are less likely to occur.

Active Energy Ray-Curable Composition

The active energy ray-curable composition of the present disclosure at least contains the urethane (meth)acrylate composition described above. The active energy ray-curable composition of the present disclosure may contain the urethane (meth)acrylate composition and a photopolymerization initiator. The active energy ray-curable composition of the present disclosure may further contain a volatile organic solvent and/or a reactive diluent.

Photopolymerization Initiator

The photopolymerization initiator varies depending on the type of active energy rays and/or the urethane (meth)acrylate composition and is not particularly limited. Known photoradical polymerization initiators and/or photocationic polymerization initiators can be used. Examples thereof include 1-hydroxycyclohexyl phenyl ketone, 2-hydroxy-2-methyl-1-phenylpropan-1-one, diethoxyacetophenone, 1-(4-isopropylphenyl)-2-hydroxy-2-methylpropan-1-one, 1-(4-dodecylphenyl)-2-hydroxy-2-methylpropan-1-one, 4-(2-hydroxyethoxy)-phenyl(2-hydroxy-2-propyl)ketone, 2-methyl-1-[4-(methylthio)phenyl]-2-morpholinopropane-1, benzoin, benzoin methyl ether, benzoin ethyl ether, benzoin isopropyl ether, benzoin n-butyl ether, benzoin phenyl ether, benzil dimethyl ketal, benzophenone, benzoylbenzoic acid, methyl benzoylbenzoate, 4-phenylbenzophenone, hydroxybenzophenone, acrylated benzophenone, 4-benzoyl-4'-methyldiphenylsulfide, 3,3'-dimethyl-4-methoxybenzophenone, thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, 2,4,6-trimethylbenzoyldiphenylphosphine oxide, methyl phenylglyoxylate, benzil, and camphorquinone. One type of the photopolymerization initiator may be used alone, or a combination of two or more types of the photopolymerization initiators may be used.

An amount of the photopolymerization initiator to be used is not particularly limited and, for example, is preferably from 1 to 20 parts by weight, and more preferably from 1 to 5 parts by weight, with respect to 100 parts by weight total of resin content of the active energy ray-curable composition. When the amount of the photopolymerization initiator to be used is in the range, curing defects are less likely to occur, and odor originated from the photopolymerization initiator is less likely to remain in the cured product. Note that "resin content" means a curable resin contained in the active energy ray-curable composition and refers to the urethane (meth)acrylate composition described above and a monofunctional (meth)acrylate and the like described below. The photopolymerization initiator and the volatile organic solvent are not included in the "resin content".

The active energy ray-curable composition of the present disclosure may contain a volatile organic solvent, monofunctional (meth)acrylate which is a reactive diluent, and various additives, in a range that does not impair the effect of the present disclosure.

As the volatile organic solvent, for example, volatile organic solvents described above for the urethane (meth)acrylate composition may be used.

The amount of the volatile organic solvent to be blended is not particularly limited and, for example, is preferably 100 parts by weight or less, and more preferably 50 parts by weight or less, with respect to 100 parts by weight of the urethane (meth)acrylate composition described above.

The monofunctional (meth)acrylate which is a reactive diluent is not particularly limited, and examples thereof include methyl (meth)acrylate, ethyl (meth)acrylate, glycerin mono(meth)acrylate, glycidyl (meth)acrylate, dicyclopentenyl (meth)acrylate, n-butyl (meth)acrylate, β-carboxyethyl (meth)acrylate, isobornyl (meth)acrylate, octyl/decyl (meth)acrylate, n-octyl (meth)acrylate, isooctyl acrylate, isobutyl (meth)acrylate, tert-butyl (meth)acrylate, isodecyl (meth)acrylate, n-lauryl (meth)acrylate, n-stearyl (meth)acrylate, cyclohexyl (meth)acrylate, and other alkyl (meth)acrylate, 2-hydroxyethyl (meth)acrylate, 2-hydroxypropyl (meth)acrylate, and 4-hydroxybutyl (meth)acrylate. Among these, n-octyl (meth)acrylate, isobornyl (meth)acrylate, and octyl/decyl (meth)acrylate are preferred, and n-octyl (meth)acrylate is particularly preferred. One type of the monofunctional (meth)acrylate may be used alone, or a combination of two or more types of the monofunctional (meth)acrylates may be used.

An amount of the monofunctional (meth)acrylate to be blended is not particularly limited and, for example, is preferably from 0 to 100 parts by weight, and more preferably from 0 to 20 parts by weight, with respect to 100 parts by weight of the urethane (meth)acrylate composition described above.

Examples of the additive include fillers, dyes and pigments, leveling agents, ultraviolet absorbers, light stabilizers, antifoaming agents, dispersing agents, and thixotropic agents. The amount of these additives to be blended is not particularly limited and, for example, is preferably from 0 to 10 parts by weight, and more preferably from 0.05 to 5 parts by weight, with respect to 100 parts by weight total of resin content of the active energy ray-curable composition.

The active energy ray-curable composition of the present disclosure can be produced by mixing the urethane (meth)acrylate composition and, as necessary, a photopolymerization initiator, a reactive diluent, a volatile organic solvent, additives, and the like. As the mixing means, a known or common means such as a mixer of various types, including a dissolver and a homogenizer, a kneader, a roll, a bead mill, and a rotation/revolution stirring apparatus can be used. The conditions, such as temperature and rotation speed, at the time of mixing is not particularly limited and can be appropriately set.

The active energy ray-curable composition of the present disclosure can be used as a filler between layers (curable composition for filling between layers), a composition for an adhesive agent, and a composition for a coating agent.

Cured product

By curing the active energy ray-curable composition of the present disclosure by active energy ray irradiation, a cured product can be obtained. The cured product of the present disclosure is preferably a sheet (film-like or sheet-like shape, cured film).

The cured product of the present disclosure can be a cured film obtained by, for example, applying the active energy ray-curable composition of the present disclosure to a target object, such as a substrate, and then curing the composition by irradiation of an active energy ray, such as ultraviolet ray or electron beam. As the method of application, a known or common method can be used, and examples thereof include a coating method and a casting method. For example, a high-pressure mercury lamp, ultra-high pressure mercury lamp, carbon arc lamp, xenon lamp, metal halide lamp or the like is used as the light source when irradiation with ultraviolet light is performed. The irradiation time of the ultraviolet light depends on the type of the light source, the distance between the light source and the applied surface, and other conditions but is at most several tens of seconds and typically several seconds. After the ultraviolet light irradiation, the curing may be completed by further performing heating as necessary. Meanwhile, for the electron beam irradiation, for example, an electron beam with energy in a range of 50 to 1000 keV is preferably used to provide an irradiation dose of 2 to 5 Mrad. Typically, an irradiation source with a lamp output of approximately from 80 to 300 W/cm is used. Furthermore, a thickness of the cured film is typically approximately from 10 to 1000 $\mu$m, and preferably approximately from 30 to 500 $\mu$m.

Examples of the target object to which the active energy ray-curable composition of the present disclosure is applied (object to be applied) include articles formed of plastics, such as polyethylene terephthalate (PET), polycarbonate, polymethacrylate, and polyvinyl chloride resins, articles obtained by subjecting plastic surfaces of these articles to metal vapor deposition, and various articles formed of glass, wood, metal plate, and paper. The surface to be applied may be subjected to release treatment. Furthermore, the shape of the target object (object to be coated) is not particularly limited and is preferably in a sheet shape (plane).

A pencil hardness, determined by the evaluation method described in Examples, of the cured product of the present disclosure is preferably B or higher, and more preferably from B to HB.

A gloss retention, determined by the evaluation method of scratch resistance described in Examples, of the cured product of the present disclosure is preferably 45% or greater, and more preferably 50% or greater.

ΔHaze, determined by the evaluation method of wear resistance described in Examples, of the cured product of the present disclosure is preferably less than 35%, and more preferably less than 30%.

An average value of heights of the four corners of the cured product of the present disclosure from a horizontal plane, determined by the evaluation method of curling resistance described in Examples, is preferably 0 mm or greater and 15 mm or less, and more preferably 0 mm or greater and 10 mm or less.

Because the cured product of the present disclosure has high hardness and excellent flexibility in a well-balanced manner and also has excellent weather resistance, the cured product is particularly suitably used in substrates used in the electronics field, optical components, optical substrates such as display substrates, and substrates for adhesive sheets. Furthermore, the active energy ray-curable composition of the present disclosure can be used, for example, for forming a cured film on a surface of an article, and specifically can be used as a coating agent (for coating), a paint (for paint), and an adhesive agent (for adhesive agent).

Each of the configurations, their combinations, and the like of the present disclosure above is an example, and addition, omission, substitution, and change of the configuration can be appropriately made without departing from the gist of the present disclosure. In addition, the present disclosure is not limited by the embodiments and is limited only by the claims.

Examples

Hereinafter, the present disclosure will be described in more detail based on examples, but the present disclosure is not limited by these examples at all.

Synthesis Examples and Comparative Synthesis Examples, the measurement method of viscosity, and the measurement method of weight average molecular weight are described below. Note that "ppm" is a concentration (based on weight) with respect to the (theoretically) resulting urethane acrylate composition, unless otherwise noted.

Measurement of Viscosity

The viscosity of the urethane acrylate composition was measured by using an E-type viscometer (TV-25, available from Toki Sangyo Co., Ltd.) in a condition at 60°C. The results are shown in Tables 1 and 2.

Measurement of Weight Average Molecular Weight

The weight average molecular weight of the urethane acrylate composition was determined by gel permeation chromatography (GPC) in the following measurement conditions, based on standard polystyrene. The results are shown in Tables 1 and 2.

Used instrument: TOSO HLC-8220GPC
Pump: DP-8020
Detector: RI-8020
Column type: Super HZM-M, Super HZ4000, Super HZ3000, Super HZ2000
Solvent: Tetrahydrofuran
Phase flow rate: 1 mL/min
Pressure in column: 5.0 MPa
Column Temperature: 40°C
Sample injection volume: 10 $\mu$L
Sample concentration: 0.2 mg/mL

The compound (A) (polyisocyanate), the compound (B) (monofunctional (meth)acrylate having a hydroxy group), the compound (C) (polyfunctional (meth)acrylate having a hydroxy group), and the compound (D) (polyfunctional (meth)acrylate having no hydroxy group) used in Synthesis Examples and Comparative Synthesis Examples are as follows.

Compound (A) (Polyisocyanate)

- TLTL-100: isocyanurate compound derived from 1,6-hexamethylene diisocyanate, product name "DURANATE TUL-100", available from Asahi Kasei Corporation, isocyanate group concentration: 23.0 wt.%, viscosity (25°C): 300 mPa·s
- D-170N: isocyanurate compound derived from 1,6-hexamethylene diisocyanate, available from Mitsui Chemicals Polyurethanes, Inc., product name "TAKENATE D-170N", isocyanate group concentration: 20.7 wt.%, viscosity (25°C): 2000 mPa·s
- N3300: isocyanurate compound derived from 1,6-hexamethylene diisocyanate, available from Sumika Bayer Urethane Co., Ltd., product name "Sumidur N3300", isocyanate group concentration: 21.8 wt.%, viscosity (25°C): 3000 mPa·s

Compound (B) (Monofunctional (Meth)acrylate Having Hydroxy Group)

- HEA: 2-hydroxyethyl acrylate, product name "β-HEA 2-hydroxyethyl acrylate", available from Nippon Shokubai Co., Ltd.
- HPA: 2-hydroxypropyl acrylate, product name "2-hydroxypropyl acrylate", available from Nippon Shokubai Co., Ltd.
- HBA: 4-hydroxybutyl acrylate, product name "4-hydroxybutyl acrylate", available from Nippon Shokubai Co., Ltd.

Compound (C) (Polyfunctional (Meth)acrylate Having Hydroxy Group)

- PETIA: pentaerythritol triacrylate, product name "PETIA", available from Daicel-Allnex Ltd.
  Compound (D) (Polyfunctional (Meth)acrylate Having No Hydroxy Group)
- PETA: pentaerythritol tetraacrylate, product name "LIGHT ACRYLATE PE-4A", available from Kyoeisha Chemical Co., Ltd.

Synthesis Example 1, Synthesis of X-1

At a first stage, in a separable flask equipped with a thermometer and a stirrer, 194.2 g of isocyanurate compound derived from 1,6-hexamethylene diisocyanate (TUL-100) as the compound (A) (polyisocyanate) and 800 ppm of dibutylhydroxytoluene (BHT) were charged. The inner temperature was set to 70°C, stirring was performed for 1 hour to homogenize the system, and then 200 ppm of dibutyltin dilaurate (DBTDL) was added. Then, 140.8 g of hydroxypropyl acrylate (HPA) as the compound (B) (monofunctional acrylate having a hydroxy group) was added dropwise for 4 hours. After the completion of the dropwise addition, the temperature was increased to 80°C, and the stirring was continued for 2 hours.

After it was confirmed that the isocyanate group concentration in the reaction solution was 0.05 wt.% or less, as a second stage, 33.0 g of TUL-100, 800 ppm of BHT, 200 ppm of DBTDL, 70.0 g of pentaerythritol triacrylate (PETIA) as the compound (C) (polyfunctional acrylate having a hydroxy group), and 62.0 g of pentaerythritol tetraacrylate (PETA) of the compound (D) (polyfunctional acrylate having no hydroxy group) (total (C + D): 132.0 g; weight proportion (C/(C + D)): 0.53) were charged, and the stirring was continued for 2 hours. It was confirmed that the isocyanate group concentration was 0.05 wt.% or less, then the reaction was terminated, and thus a urethane acrylate composition (X-1) was obtained. The weight ratio (A:B:C:D) of the compounds (A) to (D) used in this synthesis was 45.4:28.2:14.0:12.4, and the weight ratio (B/(C + D)) was 1.06.

Synthesis Example 2, Synthesis of X-2

A urethane acrylate composition (X-2) was obtained in the same manner as in Synthesis Example 1 except for using 173.9 g of TUL-100, 800 ppm of BHT, 200 ppm of DBTDL, and 126.1 g of HPA for the first stage and charging 40.0 g of TUL-100, 800 ppm of BHT, 200 ppm of DBTDL, 84.8 g of PETIA, and 75.2 g of PETA (total (C + D): 160.0 g; weight proportion (C/(C + D)): 0.53) for the second stage. The weight ratio (A:B:C:D) of the compounds (A) to (D) used in this synthesis was 42.8:25.2:15.0:15.0, and the weight ratio (B/(C + D)) was 0.79.

Synthesis Example 3, Synthesis of X-3

A urethane acrylate composition (X-3) was obtained in the same manner as in Synthesis Example 1 except for using 203.4 g of TUL-100, 800 ppm of BHT, 200 ppm of DBTDL, and 131.6 g of hydroxypropyl acrylate (HEA) as the compound (B) for the first stage and charging 33.0 g of TUL-100, 800 ppm of BHT, 200 ppm of DBTDL, 70.0 g of PETIA, and 62.0 g of PETA (total (C + D): 132.0 g; weight proportion (C/(C + D)): 0.53) for the second stage. The weight ratio (A:B:C:D) of the compounds (A) to (D) used in this synthesis was 47.3:26.3:14.0:12.4, and the weight ratio (B/(C + D)) was 1.00.

Synthesis Example 4, Synthesis of X-4

A urethane acrylate composition (X-4) was obtained in the same manner as in Synthesis Example 1 except for using 185.8 g of TUL-100, 800 ppm of BHT, 200 ppm of DBTDL, and 149.2 g of hydroxybutyl acrylate (HBA) as the compound (B) for the first stage and charging 33.0 g of TLTL-100, 800 ppm of BHT, 200 ppm of DBTDL, 70.0 g of PETIA, and 62.0 g of PETA (total (C + D): 132.0 g; weight proportion (C/(C + D)): 0.53) for the second stage. The weight ratio (A:B:C:D) of the compounds (A) to (D) used in this synthesis was 43.8:29.8:14.0:12.4, and the weight ratio (B/(C + D)) was 1.13.

Synthesis Example 5, Synthesis of X-5

A urethane acrylate composition (X-5) was obtained in the same manner as in Synthesis Example 1 except for using 202.9 g of TUL-100, 800 ppm of BHT, 200 ppm of DBTDL, and 147.1 g of HPA for the first stage and charging 30.0 g of TUL-100, 800 ppm of BHT, 200 ppm of DBTDL, 63.6 g of PETIA, and 56.4 g of PETA (total (C + D): 120.0 g; weight proportion (C/(C + D)): 0.53) for the second stage. The weight ratio (A:B:C:D) of the compounds (A) to (D) used in this synthesis was 46.6:29.4:12.7:11.3, and the weight ratio (B/(C + D)) was 1.23.

Synthesis Example 6, Synthesis of X-6

A urethane acrylate composition (X-6) was obtained in the same manner as in Synthesis Example 1 except for using 194.2 g of TUL-100, 800 ppm of BHT, 200 ppm of DBTDL, and 140.8 g of HPA for the first stage and charging 33.0 g of TUL-100, 800 ppm of BHT, 200 ppm of DBTDL, 39.6 g of PETIA, and 92.4 g of PETA (total (C + D): 132.0 g; weight proportion (C/(C + D)): 0.30) for the second stage. The weight ratio (A:B:C:D) of the compounds (A) to (D) used in this synthesis was 45.4:28.2:7.9:18.5, and the weight ratio (B/(C + D)) was 1.06.

Synthesis Example 7, Synthesis of X-7

A urethane acrylate composition (X-7) was obtained in the same manner as in Synthesis Example 1 except for using 194.2 g of TUL-100, 800 ppm of BHT, 200 ppm of DBTDL, and 140.8 g of HPA for the first stage and charging 33.0 g of TUL-100, 800 ppm of BHT, 200 ppm of DBTDL, 85.8 g of PETIA, and 46.2 g of PETA (total (C + D): 132.0 g; weight proportion (C/(C + D)): 0.65) for the second stage. The weight ratio (A:B:C:D) of the compounds (A) to (D) used in this synthesis was 45.4:28.2:17.2:9.2, and the weight ratio (B/(C + D)) was 1.06.

Synthesis Example 8, Synthesis of X-8

A urethane acrylate composition (X-8) was obtained in the same manner as in Synthesis Example 1 except for using 202.2 g of isocyanurate compound derived from 1,6-hexamethylene diisocyanate (D-170N) as the compound (A), 800 ppm of BHT, 200 ppm of DBTDL, and 132.8 g of HPA for the first stage and charging 35.7 g of D-170N, 800 ppm of BHT, 200 ppm of DBTDL, 68.5 g of PETIA, and 60.8 g of PETA (total (C + D): 129.3 g; weight proportion (C/(C + D)): 0.53) for the second stage. The weight ratio (A:B:C:D) of the compounds (A) to (D) used in this synthesis was 47.6:26.6:13.7:12.2, and the weight ratio (B/(C + D)) was 1.03.

Synthesis Example 9, Synthesis of X-9

A urethane acrylate composition (X-9) was obtained in the same manner as in Synthesis Example 1 except for using 198.8 g of isocyanurate compound derived from 1,6-hexamethylene diisocyanate (N3300) as the compound (A), 800 ppm of BHT, 200 ppm of DBTDL, and 136.2 g of HPA for the first stage and charging 34.6 g of N3300, 800 ppm of BHT, 200 ppm of DBTDL, 69.1 g of PETIA, and 61.3 g of PETA (total (C + D): 130.4 g; weight proportion (C/(C + D)): 0.53) for the second stage. The weight ratio (A:B:C:D) of the compounds (A) to (D) used in this synthesis was 46.7:27.2:13.8:12.3, and the weight ratio (B/(C + D)) was 1.04.

Comparative Synthesis Example 1, Synthesis of CA-1

A urethane acrylate composition (CA-1) was obtained in the same manner as in Synthesis Example 1 except for using 194.2 g of TUL-100, 800 ppm of BHT, 200 ppm of DBTDL, and 140.8 g of HPA for the first stage and charging 33.0 g of TUL-100, 800 ppm of BHT, 200 ppm of DBTDL, 35.6 g of PETIA, and 96.4 g of PETA (total (C + D): 132.0 g; weight proportion (C/(C + D)): 0.27) for the second stage. The weight ratio (A:B:C:D) of the compounds (A) to (D) used in this synthesis was 45.4:28.2:7.1:19.3, and the weight ratio (B/(C + D)) was 1.06.

Comparative Synthesis Example 2, Synthesis of CA-2

A urethane acrylate composition (CA-2) was obtained in the same manner as in Synthesis Example 1 except for using 194.2 g of TUL-100, 800 ppm of BHT, 200 ppm of DBTDL, and 140.8 g of HPA for the first stage and charging 33.0 g of TUL-100, 800 ppm of BHT, 200 ppm of DBTDL, 89.8 g of PETIA, and 42.2 g of PETA (total (C + D): 132.0 g; weight proportion (C/(C + D)): 0.68) for the second stage. The weight ratio (A:B:C:D) of the compounds (A) to (D) used in this synthesis was 45.4:28.2:18.0:8.4, and the weight ratio (B/(C + D)) was 1.06.

Comparative Synthesis Example 3, Synthesis of CA-3

In a separable flask equipped with a thermometer and a stirrer, 289.8 g of TUL-100 and 800 ppm of BHT were charged. The inner temperature was set to 70°C, stirring was performed for 1 hour to homogenize the system, and then 200 ppm of DBTDL was added. Then, 210.2 g of HPA was added dropwise for 4 hours. After the completion of the dropwise addition, the temperature was increased to 80°C, and the stirring was continued for 2 hours. It was confirmed that the isocyanate group concentration was 0.05 wt.% or less, then the reaction was terminated, and thus a urethane acrylate composition (CA-3) was obtained. The weight ratio (A:B:C:D) of the compounds (A) to (D) used in this synthesis was 58.0:42.0:0:0.

Comparative Synthesis Example 4, Synthesis of CA-4

In a separable flask equipped with a thermometer and a stirrer, 100.1 g of TUL-100 and 800 ppm of BHT were charged. The inner temperature was set to 70°C, stirring was performed for 1 hour to homogenize the system, and then 200 ppm of DBTDL was added. Thereafter, 211.9 g of PETIA and 188.0 g of PETA (total (C + D): 399.9 g; weight proportion (C/(C + D)): 0.53) were added dropwise for 4 hours. After the completion of the dropwise addition, the temperature was increased to 80°C, and the stirring was continued for 2 hours. It was then confirmed that the isocyanate group concentration was 0.05 wt.% or less, then the reaction was terminated, and thus a urethane acrylate composition (CA-4) was obtained. The weight ratio (A:B:C:D) of the compounds (A) to (D) used in this synthesis was 20.0:0:42.4:37.6.

Comparative Synthesis Example 5, Synthesis of CA-5

A urethane acrylate composition (CA-5) was obtained in the same manner as in Synthesis Example 1 except for using 95.6 g of TUL-100, 800 ppm of BHT, 200 ppm of DBTDL, and 69.4 g of HPA for the first stage and charging 67.1 g of TUL-100, 800 ppm of BHT, 200 ppm of DBTDL, 69.4 g of PETIA, and 42.2 g of PETA (total (C + D): 267.9 g; weight proportion (C/(C + D)): 0.53) for the second stage. The weight ratio (A:B:C:D) of the compounds (A) to (D) used in this synthesis was 32.5:13.9:28.4:25.2, and the weight ratio (B/(C + D)) was 0.26.

Comparative Synthesis Example 6, Synthesis of CA-6

A urethane acrylate composition (CA-6) was obtained in the same manner as in Synthesis Example 1 except for using 231.8 g of TUL-100, 800 ppm of BHT, 200 ppm of DBTDL, and 168.2 g of HPA for the first stage and charging 20.0 g of TUL-100, 800 ppm of BHT, 200 ppm of DBTDL, 69.4 g of PETIA, and 42.2 g of PETA (total (C + D): 80.0 g; weight proportion (C/(C + D)): 0.53) for the second stage. The weight ratio (A:B:C:D) of the compounds (A) to (D) used in this synthesis was 50.4:33.6:8.5:7.5, and the weight ratio (B/(C + D)) was 2.10.

[Table 1]

Table 1. Synthesis Examples

| Name of urethane acrylate composition | | X-1 | | X-2 | | X-3 | | X-4 | | X-5 | | X-6 | | X-7 | | X-8 | | X-9 | |
|---|---|---|---|---|---|---|---|---|---|---|---|---|---|---|---|---|---|---|---|
| | | g | wt.% | g | wt.% | g | wt.% | g | wt.% | g | wt.% | g | wt.% | g | wt.% | g | wt.% | g | wt.% |
| Compound (A) | TUL-100 | 227.2 | 45.4 | 213.9 | 42.8 | 236.4 | 47.3 | 218.8 | 43.8 | 232.9 | 46.6 | 227.2 | 45.4 | 227.2 | 45.4 | 0 | 0 | 0 | 0 |
| | D-170N | 0 | 0 | 0 | 0 | 0 | 0 | 0 | 0 | 0 | 0 | 0 | 0 | 0 | 0 | 237.9 | 47.6 | 0 | 0 |
| | N3300 | 0 | 0 | 0 | 0 | 0 | 0 | 0 | 0 | 0 | 0 | 0 | 0 | 0 | 0 | 0 | 0 | 233.4 | 46.7 |
| Compound (B) | HEA | 0 | 0 | 0 | 0 | 131.6 | 26.3 | 0 | 0 | 0 | 0 | 0 | 0 | 0 | 0 | 0 | 0 | 0 | 0 |
| | HPA | 140.8 | 28.2 | 126.1 | 25.2 | 0 | 0 | 0 | 0 | 147.1 | 29.4 | 140.8 | 28.2 | 140.8 | 28.2 | 132.8 | 26.6 | 136.2 | 27.2 |
| | HBA | 0 | 0 | 0 | 0 | 0 | 0 | 149.2 | 29.8 | 0 | 0 | 0 | 0 | 0 | 0 | 0 | 0 | 0 | 0 |
| Compound (C) | PETIA | 70.0 | 14.0 | 84.8 | 17.0 | 70.0 | 14.0 | 70.0 | 14.0 | 63.6 | 12.7 | 39.6 | 7.9 | 85.8 | 17.2 | 68.5 | 13.7 | 69.1 | 13.8 |
| Compound (D) | PETA | 62.0 | 12.4 | 75.2 | 15.0 | 62.0 | 12.4 | 62.0 | 12.4 | 56.4 | 11.3 | 92.4 | 18.5 | 46.2 | 9.2 | 60.8 | 12.2 | 61.3 | 12.3 |
| Total (C + D) | | 132.0 | 26.4 | 160.0 | 32.0 | 132.0 | 26.4 | 132.0 | 26.4 | 120.0 | 24.0 | 132.0 | 26.4 | 132.0 | 26.4 | 129.3 | 25.9 | 130.4 | 26.1 |
| Weight proportion (C/(C + D)) | | 0.53 | | 0.53 | | 0.53 | | 0.53 | | 0.53 | | 0.30 | | 0.65 | | 0.53 | | 0.53 | |
| Weight ratio (B/(C + D)) | | 1.06 | | 0.79 | | 1.00 | | 1.13 | | 1.23 | | 1.06 | | 1.06 | | 1.03 | | 1.04 | |
| Polymerization inhibitor (BHT) | ppm | 1600 | | 1600 | | 1600 | | 1600 | | 1600 | | 1600 | | 1600 | | 1600 | | 1600 | |
| Catalyst (DBTDL) | ppm | 400 | | 400 | | 400 | | 400 | | 400 | | 400 | | 400 | | 400 | | 400 | |
| 60°C Viscosity | mPa·s | 2227 | | 2003 | | 2100 | | 2450 | | 2380 | | 2103 | | 2156 | | 2920 | | 2860 | |
| Weight average molecular weight | Mw | 1355 | | 1288 | | 1250 | | 1390 | | 1466 | | 1280 | | 1333 | | 1702 | | 1630 | |

[Table 2]

Table 2. Comparative Synthesis Examples

| Name of urethane acrylate composition | | CA-1 | | CA-2 | | CA-3 | | CA-4 | | CA-5 | | CA-6 | |
|---|---|---|---|---|---|---|---|---|---|---|---|---|---|
| | | g | wt.% | g | wt.% | g | wt.% | g | wt.% | g | wt.% | g | wt.% |
| Compound (A) | TUL-100 | 227.2 | 45.4 | 227.2 | 45.4 | 289.8 | 58.0 | 100.1 | 20.0 | 162.7 | 32.5 | 251.8 | 50.4 |
| Compound (B) | HPA | 140.8 | 28.2 | 140.8 | 28.2 | 210.2 | 42.0 | 0 | 0 | 69.4 | 13.9 | 168.2 | 33.6 |
| Compound (C) | PETIA | 35.6 | 7.1 | 89.8 | 18.0 | 0 | 0 | 211.9 | 42.4 | 142.0 | 28.4 | 42.4 | 8.5 |
| Compound (D) | PETA | 96.4 | 19.3 | 42.2 | 8.4 | 0 | 0 | 188.0 | 37.6 | 125.9 | 25.2 | 37.6 | 7.5 |
| Total (C + D) | | 132.0 | 26.4 | 132.0 | 26.4 | 0 | 0 | 399.9 | 80.0 | 267.9 | 53.6 | 80.0 | 16.0 |
| Weight proportion (C/(C + D)) | | 0.27 | | 0.68 | | - | | 0.53 | | 0.53 | | 0.53 | |
| Weight ratio (B/(C + D)) | | 1.06 | | 1.06 | | - | | - | | 0.26 | | 2.10 | |
| Polymerization inhibitor (BHT) | ppm | 1600 | | 1600 | | 800 | | 800 | | 1600 | | 1600 | |
| Catalyst (DBTDL) | ppm | 400 | | 400 | | 200 | | 200 | | 400 | | 400 | |
| 60°C Viscosity | mPa·s | 2080 | | 2290 | | 3138 | | 1333 | | 1920 | | 2780 | |
| Weight average molecular weight | Mw | 1100 | | 1405 | | 1750 | | 1040 | | 1145 | | 1507 | |

EP 4 183 808 A1

The preparation of the active energy ray-curable composition, and evaluation methods of pencil hardness, scratch resistance, wear resistance, curling resistance, and weather resistance are described below for Examples and Comparative Examples.

Preparation of Active Energy Ray-Curable Composition

For each of 100 parts by weight of urethane acrylate compositions (X-1) to (X-9) and (CA-1) to (CA-6), 42 parts by weight of ethyl acetate ("AE", available from Daicel Corporation) as the volatile organic solvent and 3 parts by weight of 1-hydroxycyclohexyl phenyl ketone ("Irg 184", available from BASF Japan Ltd.) as the photopolymerization initiator were added, and thus an active energy ray-curable composition was formed.

Pencil Hardness

To a rectangular PET film having a thickness of 100 $\mu$m and a length of 100 mm $\times$ width of 100 mm (available from Toyobo Co., Ltd.), each of the active energy ray-curable compositions was applied by using a bar coater No. 12, and then dried in an oven at 80°C for 5 minutes. Then, irradiation of ultraviolet ray at an integrated light quantity of 800 mJ/cm$^2$ was performed by using a 120 W/cm high-pressure mercury lamp and the active energy ray-curable composition was cured. Thus a sample for pencil hardness test having a coating layer (cured product layer) having a film thickness of 12 to 14 $\mu$m was prepared.

The coating layer of the sample was measured in accordance with JIS K 5600. That is, the cured side surface of the laminate was rubbed with a pencil (pencil lead), and a laminate in which a scratch was observed on the surface was determined to be NG (poor). Specifically, the evaluation was performed using a pencil with a certain hardness, and when no scratch was made, another evaluation was performed with a pencil with a hardness one grade higher, and this operation was repeated. Once a scratch was observed, the laminate was re-evaluated with a hardness one grade lower, and when no scratch was observed, the laminate was evaluated again using a pencil with a hardness one grade higher. When reproducibility was confirmed twice or more, the hardness of the hardest pencil with which no scratch was made was determined as the pencil hardness of the cured coating. The results are shown in Table 3.

Pencil for evaluation: a "Pencil for Pencil Hardness Test" available from Mitsubishi Pencil Co., Ltd.

Load: 500 gf
Scratch distance: 7 mm or longer
Scratch angle: 45°
Measurement environment: 23°C, 50% RH

Scratch resistance

A sample for scratch resistance test was produced in the same manner as for the sample for pencil hardness test. Steel wool (B-204, Bon Star for industrial use #0000) was attached to a rubbing tester (standard type, available from Nippon Rika Industries Corporation), and the sample was subjected to the abrasion test in which the steel wool was reciprocated for 200 times on the coating layer under an applied load of 1 kg/cm$^2$. The initial gloss (60-degree gloss, G0) of the coated film before the abrasion test and the gloss (60-degree gloss, G1) of the coating layer after the abrasion test were measured using a gloss meter (Gloss Master VG7000, available from Nippon Denshoku Industries Co., Ltd.), the gloss retention was calculated by the following equation, and the scratch resistance was evaluated based on the following criteria. The results are shown in Table 3.

$$\text{Equation (gloss retention): } (G1/G0) \times 100\ (\%)$$

Good (good scratch resistance): the gloss retention was 50% or greater
Slightly poor (slightly poor scratch resistance): the gloss retention was 45% or greater and less than 50%
Poor (poor scratch resistance): the gloss retention was less than 45%

Wear Resistance

To a rectangular polycarbonate sheet having a thickness of 1 mm and a length of 100 mm $\times$ width of 100 mm ("Standard test panel" available from Nippon Testpanel Co., Ltd.), each of the active energy ray-curable compositions was applied by using a bar coater No. 12, and then dried in an oven at 80°C for 5 minutes. Then, irradiation of ultraviolet ray at an integrated light quantity of 400 mJ/cm$^2$ was performed by using a 120 W/cm high-pressure mercury lamp and the active energy ray-curable composition was cured. Thus a sample for wear resistance test having a coating layer having a film thickness of 10 to 12 $\mu$m was prepared.

The sample was measured in accordance with ASTM D-1044. That is, the coating layer was worn by using a Taber abrasion tester (available from Yasuda Seiki Seisakusho, Ltd.) in conditions using the Abrasion wheel CS-10F, the load of 500 g, and the number of rotation of 300 cycles. After the abrasion, the sample was washed. The haze (haze after abrasion (%)) of the sample was measured by a haze meter ("HAZE METER NDH2000", available from Nippon Denshoku Industries Co., Ltd.), and the ΔHaze (haze after abrasion - initial haze), which was a difference from the haze (initial haze (%)) of the sample before the abrasion, was calculated. Based on the obtained ΔHaze (%), the wear resistance was evaluated. The results are shown in Table 3.

Good (good wear resistance): the ΔHaze was less than 30%
Slightly poor (slightly poor wear resistance): the ΔHaze was 30% or greater and less than 35%
Poor (poor wear resistance): the ΔHaze was 35% or greater

Curling Resistance

To a rectangular PET film having a thickness of 100 $\mu$m and a length of 100 mm × width of 100 mm (available from Toyobo Co., Ltd.), each of the active energy ray-curable compositions was applied by using a bar coater No. 8, and then dried in an oven at 80°C for 5 minutes. Then, irradiation of ultraviolet ray at an integrated light quantity of 800 mJ/cm$^2$ was performed by using a 120 W/cm high-pressure mercury lamp and the cured product was cured. Thus a sample for curling resistance test having a coating layer having a film thickness of 8 to 10 $\mu$m was prepared.

For the sample, occurrence of curl was visually determined. In a case where curl occurred, the sample was placed on a horizontal plane in a manner that the sample protruded downward, heights of the four corners from the horizontal plane was measured, and an average value of these was calculated. Based on the average value (average value of the heights), the curling resistance was evaluated by the following criteria. The results are shown in Table 3.

Good (good curling resistance): the average value of the heights was 0 mm or greater and less than 10 mm
Slightly poor (slightly poor curling resistance): the average value of the heights was 10 mm or greater and less than 15 mm
Poor (poor curling resistance): the average value of the heights was 15 mm or greater

Weather Resistance

To a rectangular PET film having a thickness of 100 $\mu$m and a length of 100 mm × width of 100 mm (available from Toyobo Co., Ltd.), each of the active energy ray-curable compositions was applied by using a bar coater No. 10, and then dried in an oven at 80°C for 5 minutes. Then, irradiation of ultraviolet ray at an integrated light quantity of 800 mJ/cm$^2$ was performed by using a 120 W/cm high-pressure mercury lamp and the cured product was cured. Thus a sample for weather resistance test having a coating layer having a film thickness of 10 to 12 $\mu$m was prepared.

For the sample, by using a UV light Flourescent Weather Meter FUV (available from Suga Test Instruments Co., Ltd.; during light irradiation: 26 W/m$^2$, black panel temperature: 70°C; during wetting: humidity: 90% or greater, 50°C: light irradiation/wetting cycle = 8 hours/4 hours), 1500 hour exposure test was performed. The surface was observed after 1500 hours, and accelerated weathering was evaluated according to the following evaluation criteria.

Good (good weather resistance): the sample had no crack
Poor (poor weather resistance): the sample had a crack

[Table 3]

Table 3. Examples, Comparative Examples

| part by weight | | Examples | | | | | | | | | | Comparative Examples | | | | |
|---|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 | 6 |
| Active energy ray-curable composition | X-1 | 100 | 0 | 0 | 0 | 0 | 0 | 0 | 0 | 0 | 0 | 0 | 0 | 0 | 0 | 0 |
| | X-2 | 0 | 100 | 0 | 0 | 0 | 0 | 0 | 0 | 0 | 0 | 0 | 0 | 0 | 0 | 0 |
| | X-3 | 0 | 0 | 100 | 0 | 0 | 0 | 0 | 0 | 0 | 0 | 0 | 0 | 0 | 0 | 0 |
| | X-4 | 0 | 0 | 0 | 100 | 0 | 0 | 0 | 0 | 0 | 0 | 0 | 0 | 0 | 0 | 0 |
| | X-5 | 0 | 0 | 0 | 0 | 100 | 0 | 0 | 0 | 0 | 0 | 0 | 0 | 0 | 0 | 0 |
| | X-6 | 0 | 0 | 0 | 0 | 0 | 100 | 0 | 0 | 0 | 0 | 0 | 0 | 0 | 0 | 0 |
| | X-7 | 0 | 0 | 0 | 0 | 0 | 0 | 100 | 0 | 0 | 0 | 0 | 0 | 0 | 0 | 0 |
| | X-8 | 0 | 0 | 0 | 0 | 0 | 0 | 0 | 100 | 0 | 0 | 0 | 0 | 0 | 0 | 0 |
| | X-9 | 0 | 0 | 0 | 0 | 0 | 0 | 0 | 0 | 100 | 0 | 0 | 0 | 0 | 0 | 0 |
| | CA-1 | 0 | 0 | 0 | 0 | 0 | 0 | 0 | 0 | 0 | 100 | 0 | 0 | 0 | 0 | 0 |
| | CA-2 | 0 | 0 | 0 | 0 | 0 | 0 | 0 | 0 | 0 | 0 | 100 | 0 | 0 | 0 | 0 |
| | CA-3 | 0 | 0 | 0 | 0 | 0 | 0 | 0 | 0 | 0 | 0 | 0 | 100 | 0 | 0 | 0 |
| | CA-4 | 0 | 0 | 0 | 0 | 0 | 0 | 0 | 0 | 0 | 0 | 0 | 0 | 100 | 0 | 0 |
| | CA-5 | 0 | 0 | 0 | 0 | 0 | 0 | 0 | 0 | 0 | 0 | 0 | 0 | 0 | 100 | 0 |
| | CA-6 | 0 | 0 | 0 | 0 | 0 | 0 | 0 | 0 | 0 | 0 | 0 | 0 | 0 | 0 | 100 |
| | AE | 42 | 42 | 42 | 42 | 42 | 42 | 42 | 42 | 42 | 42 | 42 | 42 | 42 | 42 | 42 |
| | Irg 184 | 3 | 3 | 3 | 3 | 3 | 3 | 3 | 3 | 3 | 3 | 3 | 3 | 3 | 3 | 3 |
| Pencil hardness (load: 500 g) | | B | HB | B | B | B | HB | B | B | B | 2B | HB | HB | 2B | B | HB |
| Scratch Resistance | | Good | Good | Good | Good | Good | Good | Good | Good | Good | Good | Slightly poor | Poor | Good | Good | Poor |
| Wear resistance | | Good | Good | Good | Good | Good | Good | Good | Good | Good | Slightly poor | Slightly poor | Poor | Good | Good | Slightly poor |

(continued)

| part by weight | Examples | | | | | | | | | | Comparative Examples | | | | |
|---|---|---|---|---|---|---|---|---|---|---|---|---|---|---|---|
| | 1 | 2 | 3 | 4 | 5 | 6 | 7 | 8 | 9 | 1 | 2 | 3 | 4 | 5 | 6 |
| Curling resistance | Good | Good | Good | Good | Good | Good | Good | Good | Good | Slightly poor | Good | Good | Poor | Poor | Good |
| Weather resistance | Good | Good | Good | Good | Good | Good | Good | Good | Good | Good | Good | Good | Poor | Poor | Good |

As shown in Examples 1 to 9, it was found that the cured products each obtained by curing the urethane acrylate composition having the weight ratio (B/(C + D)) of the compound (B) (monofunctional (meth)acrylate having a hydroxy group) with respect to the total (C + D) of the compound (C) (polyfunctional (meth)acrylate having a hydroxy group) and the compound (D) (polyfunctional (meth)acrylate having no hydroxy group) of 0.79 to 1.23 and the weight proportion (C/(C + D)) of the compound (C) with respect to the total (C + D) of the compound (C) and the compound (D) (polyfunctional (meth)acrylate having no hydroxy group) of 0.30 to 0.65 exhibited excellent pencil hardness (B to HB), scratch resistance, wear resistance, curling resistance, and weather resistance, and had high hardness and excellent flexibility and weather resistance. On the other hand, Comparative Examples 1 and 2 had the weight proportion (C/(C + D)) of 0.27 and 0.68, Comparative Examples 3 and 4 did not contain the compound (B) or the compound (C), and Comparative Examples 5 and 6 had the weight ratio (B/C) of 0.26 and 2.10, which were not in the scope of the present disclosure, and these Comparative Examples poorly performed in all items of the pencil hardness (2B), scratch resistance, wear resistance, curling resistance, or weather resistance.

Hereinafter, variations of the invention according to the present disclosure will be described.

[Supplementary Note 1] A urethane (meth)acrylate composition being

> (i) a mixture containing a reaction product of a compound (A) and a compound (B), a reaction product of the compound (A) and a compound (C), and a compound (D), or
> (ii) a mixture containing a reaction product of the compound (A), the compound (B), and the compound (C), and the compound (D), and

>> the compound (A) being polyisocyanate, the compound (B) being monofunctional (meth)acrylate having a hydroxy group, the compound (C) being polyfunctional (meth)acrylate having a hydroxy group, and the compound (D) being polyfunctional (meth)acrylate having no hydroxy group, wherein
>> a weight ratio (B/(C + D)) of a constituent unit derived from the compound (B) with respect to a total (C + D) of a constituent unit derived from the compound (C) and the compound (D) is from 0.30 to 2.00, and
>> a weight proportion (C/(C + D)) of the constituent unit derived from the compound (C) with respect to the total (C + D) of the constituent unit derived from the compound (C) and the compound (D) is from 0.28 to 0.67.

[Supplementary Note 2] The urethane (meth)acrylate composition according to Supplementary Note 1, in which the compound (A) is a isocyanurate compound derived from an aliphatic diisocyanate.

[Supplementary Note 3] The urethane (meth)acrylate composition according to Supplementary Note 2, in which the aliphatic diisocyanate is 1,6-hexamethylene diisocyanate.

[Supplementary Note 4] The urethane (meth)acrylate composition according to Supplementary Note 2 or 3, in which an isocyanate group concentration of the isocyanurate compound is from 20.0 to 23.5 wt.%.

[Supplementary Note 5] The urethane (meth)acrylate composition according to any one of Supplementary Notes 2 to 4, in which a viscosity at 25°C of the isocyanurate compound is from 250 to 3500 mPa·s.

[Supplementary Note 6] The urethane (meth)acrylate composition according to any one of Supplementary Notes 1 to 5, in which a content of a constituent unit derived from the compound (A) is from 35 to 55 wt.% per 100 wt.% total of the constituent units derived from the compound (A), the compound (B) and the compound (C); and the compound (D).

[Supplementary Note 7] The urethane (meth)acrylate composition according to any one of Supplementary Notes 1 to 6, in which the compound (B) is hydroxyalkyl (meth)acrylate.

[Supplementary Note 8] The urethane (meth)acrylate composition according to Supplementary Note 7, in which the hydroxyalkyl (meth)acrylate is at least one selected from the group consisting of 2-hydroxyethyl acrylate, 2-hydroxypropyl acrylate, and 4-hydroxybutyl acrylate.

[Supplementary Note 9] The urethane (meth)acrylate composition according to any one of Supplementary Notes 1 to 8, in which a content of the constituent unit derived from the compound (B) is from 15 to 32 wt.% per 100 wt.% total of the constituent units derived from the compound (A), the compound (B) and the compound (C); and the compound (D).

[Supplementary Note 10] The urethane (meth)acrylate composition according to any one of Supplementary Notes 1 to 9, in which the compound (C) is pentaerythritol tri(meth)acrylate.

[Supplementary Note 111 The urethane (meth)acrylate composition according to any one of Supplementary Notes 1 to 10, in which a content of the constituent unit derived from the compound (C) is from 7 to 18 wt.% per 100 wt.% total of the constituent units derived from the compound (A), the compound (B) and the compound (C); and the compound (D).

[Supplementary Note 12] The urethane (meth)acrylate composition according to any one of Supplementary Notes 1 to 11, in which the compound (D) is pentaerythritol tetra(meth)acrylate.

[Supplementary Note 13] The urethane (meth)acrylate composition according to any one of Supplementary Notes 1 to 12, in which a content of a constituent unit derived from the compound (D) is from 11 to 18 wt.% per 100 wt.% total of the constituent units derived from the compound (A), the compound (B) and the compound (C); and the compound (D).

[Supplementary Note 14] The urethane (meth)acrylate composition according to any one of Supplementary Notes 1 to 13, in which the total (C + D) of the constituent unit derived from the compound (C) and the compound (D) is from 24 to 30% per 100 wt.% total of the constituent units derived from the compound (A), the compound (B) and the compound (C); and the compound (D).

[Supplementary Note 15] The urethane (meth)acrylate composition according to Supplementary Note 14, in which the weight proportion (C/(C + D)) of the constituent unit derived from the compound (C) in the (C + D) is from 0.30 to 0.65.

[Supplementary Note 16] The urethane (meth)acrylate composition according to any one of Supplementary Notes 1 to 15, in which the compound (C) is pentaerythritol tri(meth)acrylate, and the compound (D) is pentaerythritol tetra(meth)acrylate.

[Supplementary Note 17] The urethane (meth)acrylate composition according to any one of Supplementary Notes 1 to 16, in which the weight ratio (B/(C + D)) of the constituent unit derived from the compound (B) with respect to the total (C + D) of the constituent unit derived from the compound (C) and the compound (D) is from 0.50 to 1.30.

[Supplementary Note 18] The urethane (meth)acrylate composition according to any one of Supplementary Notes 1 to 17, in which the urethane (meth)acrylate composition is the mixture containing: the reaction product of the compound (A) and the compound (B); the reaction product of the compound (A) and the compound (C); and the compound (D).

[Supplementary Note 19] The urethane (meth)acrylate composition according to Supplementary Note 18, in which the total (A + B) of the constituent unit derived from the compound (A) and the constituent unit derived from the compound (B) in the reaction product of the compound (A) and the compound (B) is from 55 to 71 wt.% per 100 wt.% total of the constituent units derived from the compound (A), the compound (B) and the compound (C); and the compound (D), and the total (A + C) of the constituent unit derived from the compound (A) and the constituent unit derived from the compound (C) in the reaction product of the compound (A) and the compound (C) is from 14.3 to 24 wt.%.

[Supplementary Note 20] The urethane (meth)acrylate composition according to Supplementary Note 18 or 19, in which the weight ratio ((A + B)/(A + C)) of the reaction product of the compound (A) and the compound (B) and the reaction product of the compound (A) and the compound (C) is from 2.70 to 4.70.

[Supplementary Note 21] The urethane (meth)acrylate composition according to any one of Supplementary Notes 18 to 20, in which the total weight proportion of the reaction product of the compound (A) and the compound (B) and the reaction product of the compound (A) and the compound (C) is from 75 to 91 wt.%.

[Supplementary Note 22] The urethane (meth)acrylate composition according to any one of Supplementary Notes 1 to 17, in which the urethane (meth)acrylate composition is the mixture containing: the reaction product of the compound (A), the compound (B), and the compound (C); and the compound (D).

[Supplementary Note 23] The urethane (meth)acrylate composition according to Supplementary Note 22, in which the weight proportion of the reaction product of the compound (A), the compound (B), and the compound (C) is from 75 to 91 wt.%.

[Supplementary Note 24] The urethane (meth)acrylate composition according to any one of Supplementary Notes 1 to 23, in which a viscosity at 60°C is from 1000 to 5000 mPa·s.

[Supplementary Note 25] The urethane (meth)acrylate composition according to any one of Supplementary Notes 1 to 23, in which a viscosity at 60°C is from 1750 to 3000 mPa·s.

[Supplementary Note 26] The urethane (meth)acrylate composition according to any one of Supplementary Notes 1 to 25, in which a weight average molecular weight is from 500 to 2500.

[Supplementary Note 27] The urethane (meth)acrylate composition according to any one of Supplementary Notes 1 to 25, in which a weight average molecular weight is from 1000 to 2000.

[Supplementary Note 28] An active energy ray-curable composition containing the urethane (meth)acrylate composition described in any one of Supplementary Notes 1 to 27 and a photopolymerization initiator.

[Supplementary Note 29] The active energy ray-curable composition according to Supplementary Note 28, in which the photopolymerization initiator is 1-hydroxycyclohexyl phenyl ketone.

[Supplementary Note 30] The active energy ray-curable composition according to Supplementary Note 28 or 29, in which an amount of the photopolymerization initiator to be used is from 1 to 5 parts by weight per 100 parts by weight total of a resin content of the active energy ray-curable composition.

[Supplementary Note 31] The active energy ray-curable composition according to any one of Supplementary Notes 28 to 30, further containing a reactive diluent and/or a volatile organic solvent.

[Supplementary Note 32] The active energy ray-curable composition according to any one of Supplementary Notes 28 to 31, wherein the volatile organic solvent is ethyl acetate.

[Supplementary Note 33] The active energy ray-curable composition according to any one of Supplementary Notes 28 to 32, in which an amount of the volatile organic solvent to be blended is 50 parts by weight or less per 100 parts by weight of the urethane (meth)acrylate composition.

[Supplementary Note 34] A cured product of the active energy ray-curable composition described in any one of Supplementary Notes 28 to 33.

[Supplementary Note 35] The cured product according to Supplementary Note 34, in which a pencil hardness determined by an evaluation method described in Examples is B to HB.

[Supplementary Note 36] The cured product according to Supplementary Note 34 or 35, in which a gloss retention determined by an evaluation method of scratch resistance described in Examples is 50% or greater.

[Supplementary Note 37] The cured product according to any one of Supplementary Notes 34 to 36, in which ΔHaze determined by an evaluation method of wear resistance described in Examples is less than 30%.

[Supplementary Note 38] The cured product according to any one of Supplementary Notes 34 to 37, in which an average value of heights of four corners from a horizontal plane determined by an evaluation method of curling resistance described in Examples is 0 mm or greater and 10 mm or less.

Industrial Applicability

Since the urethane (meth)acrylate composition of the present disclosure has the configuration described above, a cured product (e.g., coating layer) realizing excellent flexibility and weather resistance can be formed by using the urethane (meth)acrylate composition as an active energy ray-curable composition containing the urethane (meth)acrylate composition, and thus is industrially advantageous.

**Claims**

1. A urethane (meth)acrylate composition being

   (i) a mixture comprising: a reaction product of a compound (A) and a compound (B); a reaction product of the compound (A) and a compound (C); and a compound (D), or
   (ii) a mixture comprising: a reaction product of a compound (A), a compound (B), and a compound (C); and a compound (D), wherein

   the compound (A) is polyisocyanate, the compound (B) is monofunctional (meth)acrylate having a hydroxy group, the compound (C) is polyfunctional (meth)acrylate having a hydroxy group, and the compound (D) is polyfunctional (meth)acrylate having no hydroxy group, and
   a weight ratio (B/(C + D)) of a constituent unit derived from the compound (B) with respect to a total (C + D) of a constituent unit derived from the compound (C) and the compound (D) is from 0.30 to 2.00, and
   a weight proportion (C/(C + D)) of the constituent unit derived from the compound (C) with respect to the total (C + D) of the constituent unit derived from the compound (C) and the compound (D) is from 0.28 to 0.67.

2. The urethane (meth)acrylate composition according to claim 1, wherein the compound (C) is pentaerythritol tri(meth)acrylate, and the compound (D) is pentaerythritol tetra(meth)acrylate.

3. The urethane (meth)acrylate composition according to claim 1 or 2, wherein a viscosity at 60°C is from 1000 to 5000 mPa·s.

4. The urethane (meth)acrylate composition according to any one of claims 1 to 3, wherein a weight average molecular weight is from 500 to 2500.

5. An active energy ray-curable composition comprising the urethane (meth)acrylate composition described in any one of claims 1 to 4 and a photopolymerization initiator.

6. The active energy ray-curable composition according to claim 5, further comprising a reactive diluent and/or a volatile organic solvent.

7. A cured product of the active energy ray-curable composition described in claim 5 or 6.

| | **INTERNATIONAL SEARCH REPORT** | International application No. |
|---|---|---|
| | | PCT/JP2021/026227 |

**A. CLASSIFICATION OF SUBJECT MATTER**
Int.Cl. C08F290/06(2006.01)i, C08F290/14(2006.01)i, C08F299/06(2006.01)i,
C09D175/14(2006.01)n, C09D175/16(2006.01)i, C08F2/46(2006.01)i,
C08G18/67(2006.01)i
FI: C08G18/67010, C08F290/14, C08F290/06, C08F299/06, C08F2/46,
C09D175/16, C09D175/14
According to International Patent Classification (IPC) or to both national classification and IPC

**B. FIELDS SEARCHED**

Minimum documentation searched (classification system followed by classification symbols)
Int.Cl. C08F290/06, C08F290/14, C08F299/06, C09D175/14, C09D175/16,
C08F2/46, C08G18/67

| Documentation searched other than minimum documentation to the extent that such documents are included in the fields searched | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2013/114750 A1 (DAICEL CYTEC CO., LTD.) 08 August 2013 (2013-08-08), claims 1-5, paragraphs [0116]-[0133], synthesis example 6/UA6, formulation example A7, example 7 | 1-7 |
| A | JP 2016-522284 A (3M INNOVATIVE PROPERTIES COMPANY) 28 July 2016 (2016-07-28), paragraph [0129] | 1-7 |
| A | JP 2017-132991 A (UBE INDUSTRIES, LTD.) 03 August 2017 (2017-08-03), entire text | 1-7 |
| A | JP 2016-190948 A (MITSUI CHEMICALS, INC.) 10 November 2016 (2016-11-10), entire text | 1-7 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 August 2021 | 24 August 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2021/026227

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2014/174861 A1 (DAICELL ALLNEX LTD.) 30 October 2014 (2014-10-30), entire text | 1-7 |
| A | JP 11-279486 A (DAINIPPON INK AND CHEMICALS INC.) 12 October 1999 (1999-10-12), entire text | 1-7 |

Form PCT/ISA/210 (second sheet) (January 2015)

**INTERNATIONAL SEARCH REPORT**
Information on patent family members

| International application No. |
|---|
| PCT/JP2021/026227 |

| | | |
|---|---|---|
| WO 2013/114750 A1 | 08 August 2013 | US 2015/0005431 A1<br>claims 1-14, paragraphs [0146]-[0245],<br>synthesis example 6/UA6,<br>formulation example A7, example 7<br>EP 2810968 A1<br>CN 104039850 A<br>KR 10-2014-0119110 A<br>TW 201336877 A |
| JP 2016-522284 A | 28 July 2016 | US 2016/0083628 A1<br>paragraph [0142]<br>WO 2014/186316 A1<br>EP 2803711 A1<br>CN 105229101 A<br>KR 10-2016-0009053 A |
| JP 2017-132991 A | 03 August 2017 | (Family: none) |
| JP 2016-190948 A | 10 November 2016 | (Family: none) |
| WO 2014/174861 A1 | 30 October 2014 | US 2016/0068708 A1<br>entire text<br>EP 2990428 A1<br>CN 105143297 A<br>KR 10-2016-0004300 A<br>TW 201441303 A |
| JP 11-279486 A | 12 October 1999 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020120889 A
- JP 2009062499 A
- JP 2009227915 A